# FASCICULE DE BREVET EUROPEEN

(11) **EP 2 128 410 B1**
(45) Date de publication et mention de la délivrance du brevet: **13.07.2011**
(21) Numéro de dépôt: 09159465.5
(22) Date de dépôt: 05.05.2009
(51) Int. Cl.: F02D 35/02, F02P 5/15, F02P 5/152

(54) **Méthode de détection du cliquetis dans un moteur à allumage commande**
Verfahren zur Klopferkennung einer fremdgezündeten Brennkraftmaschine
Knock detection method for a spark ignited internal combustion engine

(30) Priorité: 29.05.2008 FR 0853489
(43) Date de publication de la demande: 02.12.2009
(73) Titulaire: PEUGEOT CITROËN AUTOMOBILES S.A., 78140 Vélizy Villacoublay (FR)
(72) Inventeur: Kubasik, Sébastien, 90500 Beaucourt (FR)
(74) Mandataire: Ménès, Catherine

(56) Documents cités:
- WO-A-01/79678
- WO-A-2004/111416
- DE-A1- 4 015 992
- DE-A1- 4 109 430
- DE-A1- 4 409 103
- DE-A1- 19 605 407
- KR-A- 20070 063 886

## Description

La présente invention a trait à la détection du cliquetis dans les moteurs à allumage commandé. Plus précisément, l'invention concerne une adaptation de la détection du cliquetis selon la qualité du carburant utilisé.

Le cliquetis est un phénomène associé à une combustion anormale dans les moteurs à allumage commandé, lié à l'apparition d'ondes de choc dans la chambre de combustion du moteur. Ce phénomène est typiquement attribué à l'auto-inflammation de particules de carburant imbrûlées qui sont repoussées vers les parois de la chambre de combustion par le souffle du front de flamme généré normalement au niveau de l'arc électrique (étincelle) de la bougie d'allumage. Suite à l'élévation de la température et de la pression, ces particules peuvent s'auto-enflammer et provoquer des ondes de choc susceptibles d'endommager les pistons, les segments ou même les cylindres, et donc provoquer une casse moteur.

Pour une architecture de moteur et un taux de compression donnés, le cliquetis va essentiellement dépendre de l'avance à l'allumage, c'est-à-dire de l'angle de rotation du volant moteur qui sépare l'instant d'étincelle du point mort haut et de la limite d'auto-inflammation du carburant. Cette limite est le plus souvent qualifiée en fonction de l'indice d'octane du carburant sur une échelle de 0 à 100 si le carburant utilisé se comporte du point de vue de ses propriétés d'auto-inflammation comme un heptane (indice de 0) ou un isooctane (indice de 100).

L'avance à l'allumage est adaptée de façon permanente aux conditions de fonctionnement du moteur que l'on peut essentiellement ramenée à la vitesse de rotation de l'arbre moteur (régime moteur) et au couple appliqué sur celui-ci, l'ensemble de ces deux paramètres définissant un point de fonctionnement du moteur. Cette adaptation est effectuée sur tous les véhicules modernes à l'aide du contrôle moteur. En fonction de cartographies définies lors des essais au banc moteur, le contrôle moteur va ainsi proposer une avance à l'allumage donnée selon le point de fonctionnement donné. Cette cartographie est établie en sachant qu'une dégradation de l'avance à l'allumage (décalage en direction du point mort haut) se traduit par une diminution du risque de cliquetis mais aussi par une dégradation des performances du moteur, notamment au niveau de la consommation et de la qualité de la combustion, donc de la pollution générée par cette combustion.

L'emploi de cartographies ne permet pas toutefois de s'affranchir totalement du risque de formation d'un cliquetis qui peut apparaître notamment en raison des dispersions de fabrication qui font qu'un moteur donné n'est jamais totalement identique à un moteur de référence et à l'historique plus ou moins récent des conditions de roulage et des conditions météorologiques dans lesquelles ce roulage a eu lieu. En pratique, la naissance du cliquetis peut donc apparaître comme essentiellement aléatoire aussi les véhicules modernes sont systématiquement pourvus d'équipements propres à détecter l'apparition d'un tel événement et à commander une modification de l'angle d'avance à l'allumage pour y remédier.

De tels équipements comportent typiquement un capteur, par exemple du type accéléromètre pour détecter et quantifier les vibrations générées par le cliquetis, en utilisant par exemple un capteur de type accéléromètre fixé au bloc moteur et sensible aux fréquences de vibrations du cliquetis, et des moyens de calculs propres à analyser les vibrations mesurées. Le cliquetis n'étant qu'une des multiples sources de vibrations qui peuvent affecter un moteur, cette détection est effectuée dans la fenêtre temporelle pendant laquelle cet événement est normalement susceptible de se produire, donc peu après le point mort haut.

Cette méthodologie est satisfaisante si le moteur est bien alimenté avec un carburant conforme à celui préconisé par le constructeur. Si tel n'est pas le cas, et en particulier si le carburant est d'un indice d'octane significativement plus bas que le carburant normalement préconisé, l'événement cliquetis peut se produire avec un certain retard, à l'extrême en dehors de la fenêtre de détection. Même si l'événement se produit bien dans cette fenêtre, il va se produire dans la toute dernière partie de celle-ci, de sorte qu'il devient pratiquement impossible de distinguer l'événement par rapport au bruit de fond, le signal n'étant alors observer que sur une période trop courte.

Or, en règle générale, le réglage de l'avance à l'allumage est effectué en permanence, en augmentant progressivement cette avance tant qu'un cliquetis n'est pas détecté, puis en se rapprochant significativement du point mort haut suite à la détection d'un événement cliquetis et en autorisant à nouveau un retour lent vers des avances à l'allumage plus grandes. Un mauvais positionnement de la fenêtre de détection ne permet pas de détecter un cliquetis naissant, et peut conduire à ne corriger le phénomène qu'une fois le cliquetis installé, autrement dit dans des conditions telles que l'on ne peut totalement écarter le risque d'endommagement du moteur, ou à tout le moins d'une combustion anormalement polluante.

La présente invention a ainsi pour but une méthode de détection du cliquetis présentant une plus grande robustesse que les procédés connus, et en particulier mieux adaptée à des moteurs opérant avec une large gamme de carburants, notamment du fait d'une commercialisation dans de nombreux pays.

A cet effet, l'invention propose une méthode de détection d'une combustion anormale dans la chambre de combustion d'un cylindre d'un moteur à combustion interne à allumage commandé, selon laquelle on produit un signal dont l'amplitude dépend d'une grandeur liée à la combustion du mélange carburé et on traite les signaux reçus pendant une fenêtre temporelle selon un algorithme comparatif avec un signal de référence représentatif d'une combustion normale dans les mêmes conditions représentatives du fonctionnement du moteur. Selon l'invention, le début de la fenêtre temporelle est choisi avec un retard prédéterminé par rapport à une avance de base à l'allumage, c'est-à-dire une avance à l'allumage calibrée, notamment en fonction du point de fonctionnement du moteur.

Selon l'art, l'instant du début de la fenêtre était défini arbitrairement par référence au point mort haut (pour fixer les idées, 1/10 de tour de vilebrequin). Selon l'invention au contraire, cet instant de début est fixé par rapport une avance de base à l'allumage déterminée en fonction du régime moteur (toujours pour fixer les idées 2/10 de tour de vilebrequin). Si l'avance de base est de 1/10 de tour, le début de la fenêtre est synchrone avec le début de la fenêtre selon l'art. Par contre, si cette avance est augmentée, le début de la fenêtre sera plus près du point mort haut. A l'inverse, si l'avance à l'allumage est dégradée, par exemple si l'allumage est maintenant commandé exactement au moment du point mort haut, le début de la fenêtre est retardé à 2/10 de tour vilebrequin. Par conséquent, cet instant de début sera - toutes choses égales par ailleurs - retardé si le moteur est alimenté avec un carburant plus détonant qui conduit à dégrader l'avance à l'allumage.

L'invention repose sur la considération de ce que bien que le phénomène de cliquetis est d'autant plus intense que l'avance à l'allumage est grande, il existe néanmoins un temps minimal entre l'instant d'apparition du cliquetis et l'instant d'allumage, temps minimal que l'on peut rapprocher physiquement du fait que la vitesse de combustion est limitée. En calant la fenêtre d'observation du cliquetis avec cet instant à partir duquel le cliquetis peut se produire, on s'assure ainsi de pouvoir le détecter au moment où il est effectivement le plus critique et de ce fait, la fenêtre cliquetis qui est utilisée est bien celle dans laquelle l'événement cliquetis le plus intense qu'il soit est susceptible de se produire.

Dans une variante préférée de l'invention, l'avance de base est choisie selon une cartographie dont au moins un des paramètres est une grandeur caractéristique de la qualité du carburant. Autrement dit, on dégrade l'avance à l'allumage dès les premiers tours moteurs si on dispose déjà d'une information sur cette qualité, ou à tout le moins dès que cette information est acquise. Autrement dit, la consigne initiale est essentiellement correcte et les variations imposées par les stratégies d'évitement du cliquetis n'ont qu'un impact du second ordre comme dans le cas d'un moteur opérant avec le carburant de référence utilisé lors des mises au point. Bien entendu, on continue néanmoins à régler en permanence l'avance à l'allumage en tenant compte du point de fonctionnement du moteur (régime, charge), de la richesse du mélange carburé, de la température et éventuellement d'une série de correctifs permettant de tenir compte d'autres paramètres comme par exemple la température extérieure ou l'altitude (pour un meilleur reflet des conditions de température et de pression de l'air d'admission).

Dans une variante, cette grandeur caractéristique de la qualité du carburant est son indice d'octane.

L'étape d'acquisition de la grandeur caractéristique de la qualité du carburant peut être réalisée par de nombreux moyens et comporter par exemple une étape de mesure de l'abaissement de température qui se produit par suite de l'enthalpie de vaporisation d'un film de carburant, comme il est connu par exemple du brevet FR2826405 ou une étape de mesure de la volatilité du carburant (voir WO 2006067204 par exemple), ou encore une étape d'analyse de la composition du carburant par analyse spectroscopique, de préférence dans les régions spectrales du proche infrarouge, de la structure moléculaire des hydrocarbures composant le carburant (voir WO 2006067204). Dans tous ces cas, cités à titre non limitatif, il peut être associé à la mesure une grandeur caractéristique du carburant, comme par exemple son indice d'octane. Notons qu'il est aussi possible que l'information soit directement rentrée par le conducteur, par exemple suite à un plein du réservoir, par exemple au moyen de l'interface des systèmes de téléphonie embarqués.

Dans une autre variante de l'invention, l'étape d'acquisition d'une grandeur caractéristique de la qualité du carburant est réalisée par apprentissage à partir de l'observation même du phénomène de cliquetis, comme décrit par exemple dans le brevet EP138495, c'est-à-dire par comparaison entre les événements cliquetis attendus pour une qualité donnée de carburant et ceux effectivement observés, cette stratégie d'apprentissage supposant une première hypothèse sur la qualité du carburant pour sélectionner une première cartographie de réglage de base de l'avance à l'allumage, le plus simple étant de disposer de moyens pour mémoriser la qualité du carburant estimée juste avant l'arrêt précédent un démarrage.

Cette étape d'acquisition « sans capteur » peut se substituer à une étape d'acquisition basée sur une mesure effective d'une propriété du carburant ou de façon préférée, venir renforcer la robustesse de la méthode en offrant une confirmation du bon fonctionnement du dispositif de mesure (dont on privilégiera à priori les informations par nature plus précises néanmoins que cette estimation à partir de l'observation du cliquetis) ou en cas de défaillance du système de mesure, une valeur par défaut plus fines qu'une valeur conservatrice qui pourrait revenir à, par défaut, considérer que le carburant utilisé est le plus mauvais autorisé par le moteur, et donc à se placer pratiquement systématiquement avec une avance à l'allumage dégradée par rapport à la situation optimale.

Comme indiqué plus haut, le délai entre l'instant d'allumage et le début de la fenêtre d'observation du cliquetis peut être associé à la cinétique de combustion du carburant. Pour fixer ce délai, il est donc avantageux de tenir compte du temps nécessaire à la combustion de la plus grande partie du carburant, par exemple de 90% du carburant injecté dans un cylindre, valeur pour laquelle le pic de pression dans le cylindre est normalement observé. Ces valeurs seront par exemple déterminées à partir de mesures de l'énergie dégagée par la combustion, réalisées à partir d'essais sur bancs moteurs.

La palette des carburants commercialisés dans l'ensemble du monde étant très large, ces essais seront par exemple réalisés avec simplement 3 carburants, choisis représentatifs d'une qualité respectivement supérieure, moyenne et faible, pour fixer les idées des RON98, RON91 et RON85, les valeurs de délai étant ensuite intégrées dans cartographies associées. Pour les carburants intermédiaires, une interpolation linéaire pourra être utilisée pour calculer les valeurs de délais au plus juste sans pour autant devoir augmenter le nombre de cartographies, et par conséquent les tailles mémoires.

Avantageusement, la méthode selon l'invention peut être également utilisée pour détecter les événements dits de pré-allumage, correspondant à une inflammation dans la chambre de combustion avant même l'instant d'étincelle déterminé par l'avance à l'allumage, événements qui sont certes beaucoup moins fréquents que les phénomènes de cliquetis mais qu'il importe de stopper au plus vite compte tenu de la dangerosité pour le moteur. En effet, selon l'invention, la fenêtre d'observation du cliquetis est définie d'une manière telle qu'aucun événement cliquetis ne peut se produire avant l'ouverture de cette fenêtre. Il en résulte que tout pic de pression qui se produit avant le début de cette fenêtre peut être attribué sans ambigüité à un phénomène de pré-allumage et ceci, indépendamment de l'angle d'avance à l'allumage commandé sur le cycle considéré.

D'autres détails et caractéristiques avantageuses de l'invention ressortent de la description faite ci-après en référence aux dessins dans lesquels :
- La figure 1 illustre, pour un moteur donné, la répartition des pics de pression en fonction de l'avance à l'allumage ;
- La figure 2 illustre, pour ce même moteur, la relation entre le délai observé pour l'apparition d'un événement cliquetis et l'intensité du pic de pression associé ;
- La figure 3 montre, pour un même moteur, la valeur des avances de base en fonction du régime moteur, calibrées par des essais au banc moteur réalisés à partir de 3 carburants ayant des indices d'octane différents.
- La figure 4 compare le positionnement les moments d'apparition du cliquetis dans le cas d'un carburant de référence, avec le positionnement de la fenêtre de détection le plus adapté, et le moment d'apparition du cliquetis dans le cas d'un carburant d'un moindre indice d'octane.
- La figure 5 illustre une stratégie mise en oeuvre pour la détection du cliquetis conformément à l'invention.

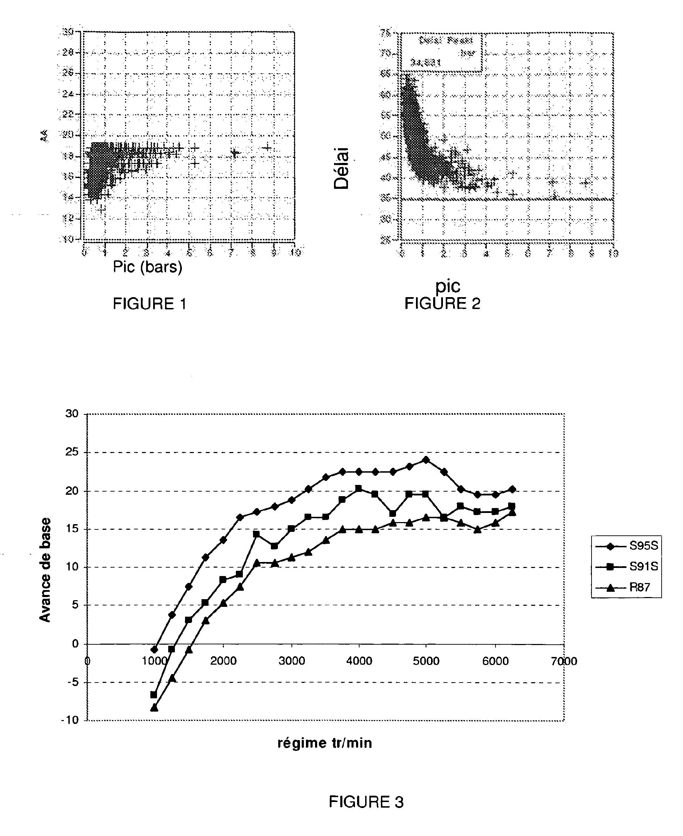

De nombreux essais ont permis de mettre en évidence une relation entre les délais de combustion et le cliquetis. Plus un niveau d'avance appliqué est important, plus le cliquetis est intense, mais le temps écoulé entre ces deux moments atteint une durée minimale. Ceci est illustré à la figure 1 où on a représenté en abscisse l'intensité des pics de pression (en bars) dans la chambre de combustion et en ordonnées, la valeur de l'avance à l'allumage (en degré vilebrequin) pour un moteur donné. Même si clairement le phénomène de cliquetis est un phénomène globalement erratique, il est clair que les pics les plus intenses, par exemple supérieurs 5 bars, ne se rencontrent que pour des valeurs d'avance à l'allumage les plus élevées.

La figure 2 montre par ailleurs la relation entre l'intensité du pic et le moment où celui-ci se produit par rapport à l'instant d'allumage. Dans cette figure, et pour toutes les figures suivantes, le temps est exprimé en degrés vilebrequin pour plus de clarté (et doit donc être rapporté au régime moteur).

Sur cette figure 2, on constate que le délai qui sépare le pic de pression de l'instant d'allumage tend à diminuer avec l'intensité des pics, avec une asymptote qui, dans l'exemple donné est d'environ 35°.

Cette durée minimale peut être interprétée physiquement comme traduisant le fait que la vitesse de combustion n'est pas infinie et que le front de flamme n'atteint la paroi de la chambre qu'après un certain temps. Il est donc avantageux de choisir comme fenêtre d'observation du cliquetis une plage temporelle ne débutant qu'à proximité du temps correspondant à cette durée minimale.

Ce choix est d'autant plus important que la qualité des carburants utilisés peut varier dans une grande mesure, soit en fonction du choix de l'automobiliste lorsque des carburants d'indice d'octane différents lui sont proposés à la pompe, soit tout simplement en fonction de la région où circule le véhicule.

En fonction du carburant, et donc de sa plus ou moins grande inflammabilité, on va en effet décider d'allumer le mélange plus ou moins tôt dans le cycle du piston. La figure 3 représente ainsi les valeurs établies pour un moteur donné en fonction du régime moteur, en supposant le moteur à pleine charge. Ainsi, à 2000 tours minute, l'allumage pourra être normalement commandé à environ 13° avant le point mort haut pour un carburant de référence RON 95 (c'est-à-dire un carburant dont l'indice d'octane équivalent est de 95%, correspondant au « super » de base disponible dans les stations service d'Europe de l'Ouest). Si l'on utilise un carburant RON91 dont l'indice d'octane n'est plus que de 91%, l'avance à l'allumage de base doit être réduite à environ 8°. Enfin, pour un carburant RON87 dont l'indice d'octane est de 87%, l'avance à l'allumage de base n'est plus que d'environ 5°. Bien entendu, ces valeurs sont les valeurs de référence telles qu'établies par exemple après essais sur banc moteur, qui ne se substituent pas aux valeurs effectivement utilisées compte tenu de l'observation du phénomène de cliquetis. Simplement, il est avantageux de procéder à priori avec de telles valeurs : si le carburant est un RON95, après chaque détection d'un événement cliquetis, il peut être décidé de revenir à une valeur de par exemple 10°, puis s'autoriser petit à petit à augmenter cette valeur. Dans l'hypothèse d'un carburant de type RON87, on reviendra par contre à un allumage à l'instant du point mort haut. Ceci évite de revenir systématiquement au cas le plus défavorable, dans l'hypothèse du RON87, avec une pollution inutile pendant tout le temps nécessaire pour augmenter doucement l'avance à l'allumage.

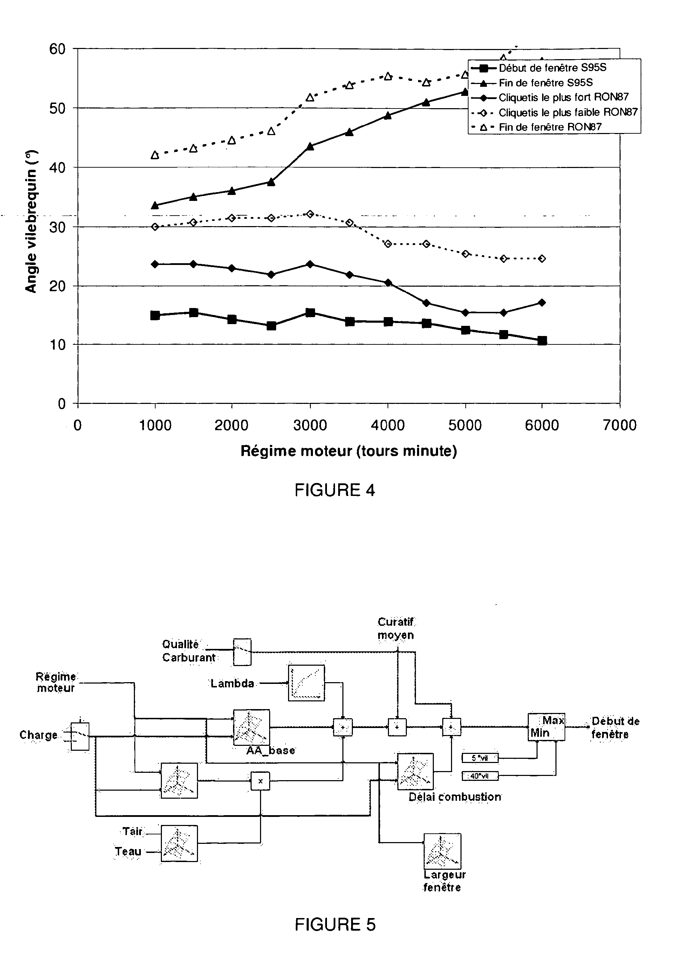

A la figure 4, on a représenté en fonction du régime moteur, l'angle le plus bas auquel le cliquetis apparait (le zéro degré angulaire étant donné par le point mort haut), en fonction du régime moteur (à pleine charge), pour un carburant de base RON95, ici référencé S95S. Ces valeurs sont reportées dans la courbe dite de début de fenêtre S95D, avec des carrés pleins pour marques. Quand le phénomène de cliquetis se produit, il se produit un premier pic de pression qui s'amortit peu à peu. Au-delà de cette phase d'amortissement, le bruit dû au cliquetis ne peut plus être distingué des autres bruits moteurs. A la figure 4, on a ainsi représenté sous la légende « fin de fenêtre S95S », marques triangulaires est la courbe de fin de période d'amortissement.

De ce fait, pour une plus grande sensibilité de la mesure, il est judicieux de placer la fenêtre de cliquetis essentiellement dans la fenêtre angulaire qui débute à l'angle de cliquetis au plus bas, et se termine à la fin de la période d'amortissement. Par exemple, pour le moteur considéré et pour un régime de 2000 tours par minute, le début de fenêtre est calibré à 15° vilebrequin, et la fin à 36° vilebrequin. Dans cet exemple, à 2000 tours minute, la largeur optimisée de la fenêtre, couvrant l'amortissement de pression et la réponse de l'accéléromètre est donc de 36° -16°, soit 21° vilebrequin, c'est-à-dire un secteur angulaire suffisamment long pour isoler le phénomène cliquetis d'autres phénomènes qui peuvent être également source de bruit.

Dans une variante simplifiée, il peut être noté que l'angle d'apparition du cliquetis est très peu impacté par le régime moteur, de sorte qu'une cartographie simplifiée pourra éventuellement être utilisée, en considérant par exemple un début de fenêtre entre 10° et 15°.

Par ailleurs, dans un premier ordre de grandeur, on peut considérer que la période d'amortissement a une durée absolue (exprimée en secondes) essentiellement constante. Par contre, quand cette durée est exprimée en secteur angulaire, il est clair que cette valeur va alors croître proportionnellement avec le régime moteur, aussi peut-on éventuellement reconstituer la courbe de fin amortissement à partir d'un simple point.

Que l'on procède avec une cartographie établie point par point ou reconstituée à partir d'un simple point, la question posée est l'impact d'un carburant de moindre qualité, notamment de moindre indice d'octane.

Sur la figure 4, on a donc localisé le cliquetis le plus fort observé pour du carburant RON87 (courbe en traits continus, avec des marques en losange) et le cliquetis le plus faible, ou cliquetis naissant (courbes en traits discontinus, avec des marques en losange).

Si la fenêtre d'observation n'est pas ajustée en fonction de la qualité du carburant, et calibrée pour le carburant de référence RON95, en reprenant l'exemple précédent d'un régime moteur à 2000 tours minute, on constate qu'aucun phénomène n'est observé avant 23° vilebrequin, et l'observation ne se fait plus en fait qu'entre 23° et 36°, donc sur seulement 13° vilebrequin, ce qui signifie une perte de sensibilité de la mesure. Pire, dans le cas d'un cliquetis naissant, la courbe est à quelques degrés seulement de la fin de fenêtre. Ainsi, pour le cliquetis naissant, l'observation ne peut se faire qu'entre environ 32° vilebrequin et 36 ° vilebrequin, ce qui est clairement une fenêtre d'observation trop courte. En conséquence, le phénomène ne pourra pas être corrigé immédiatement par une dégradation de l'avance à l'allumage.

L'amortissement étant comme indiqué précédemment d'une durée essentiellement fixe, pour ce nouveau carburant, il est avantageux de décaler entièrement la fenêtre d'observation, donc en utilisant la même largeur de fenêtre que pour le carburant de référence, mais en débutant maintenant de l'angle correspondant au cliquetis le plus précoce observé pour le carburant RON87. Autrement dit, la fenêtre est maintenant délimitée par la courbe de cliquetis le plus fort (marques en forme de losanges pleins) et par la courbe en pointillée, avec des triangles vides comme marques, construites simplement par décalage de la courbe de fin de fenêtre. Ainsi, on ne perd plus en sensibilité et même pour les cliquetis faibles (correspondant à des pics plus faibles donc plus rapidement amortis), on a une bonne fenêtre d'observation.

La figure 5 illustre un exemple de stratégie de détection du cliquetis mettant en oeuvre l'invention.

Une avance de base à l'allumage est choisie en tenant compte du régime moteur, et soit en se basant sur une calibration effectuée à pleine charge, soit en pondérant la valeur en tenant compte de la charge effective (par exemple en différenciant une pleine charge ou une demi-charge).

Cette avance de base à l'allumage est maintenant corrigée, en tenant compte de la qualité du carburant et d'autres paramètres comme par exemple la richesse du mélange air/carburant (Lambda, pour un moteur essence à allumage commandé, la richesse est normalement de 1, le mélange correspondant aux conditions stoechiométrique de la réaction de combustion).

Il peut également être tenu compte de la température de l'air d'admission Tair et de celle du moteur, donnée par la température du liquide de refroidissement moteur Teau. L'ensemble de ces valeurs permet de corriger l'avance de base à appliquer, avance de base qui est une nouvelle fois corrigée en tenant compte de l'avance de base appliquée aux cycles précédents (curatif moyen, paramètre qui rend compte du fait que tant qu'un cliquetis n'a pas été observé, on augmente l'avance à l'allumage, et que l'on revient vers les points morts haut en cas de début de cliquetis).

On peut ainsi déterminer le délai de combustion, la largeur de la fenêtre de mesure de cliquetis et enfin le début de la fenêtre, en s'interdisant de travailler avec un début à moins de 5° vilebrequin (pour ne pas être trop près du point mort haut et donc du phénomène de renversement de la course du piston) et à plus de 40 °.

L'homme de l'art comprendra que cette stratégie peut encore être complétée, notamment en tenant compte non seulement de la charge statique mais aussi de la charge dynamique afin de mieux gérer les états transitoires.

## Revendications

1. Méthode de détection d'une combustion anormale dans la chambre de combustion d'un cylindre d'un moteur à combustion interne à allumage commandé, selon laquelle on produit un signal dont l'amplitude dépend d'une grandeur liée à la à la combustion du mélange carburé et on traite les signaux reçus pendant une fenêtre temporelle selon un algorithme comparatif avec un signal de référence représentatif d'une combustion normale dans les mêmes conditions représentatives du fonctionnement du moteur, le début de la fenêtre temporelle étant choisi avec un retard prédéterminé par rapport à une avance de base à l'allumage choisie en fonction du point de fonctionnement du moteur **caractérisée en ce que** le retard prédéterminé tient compte du temps nécessaire à la combustion de la plus grande partie du carburant.

2. Méthode selon la revendication 1, **caractérisée en ce que** l'avance de base à l'allumage est choisie selon une cartographie moteur dont au moins un des paramètres de base ou de correction est une grandeur caractéristique d'au moins un des paramètres suivants : la richesse du mélange carburé, la température de l'air frais admis dans le cylindre, la température du moteur et l'altitude.

3. Méthode de détection selon la revendication 1 ou la revendication 2, **caractérisée en ce que** l'avance de base à l'allumage est choisie selon une cartographie moteur dont au moins un des paramètres de base ou de correction est une grandeur caractéristique de la qualité du carburant.

4. Méthode selon la revendication 3, **caractérisée en ce que** la grandeur caractéristique de la qualité du carburant est représentative de l'indice d'octane du carburant.

5. Méthode selon la revendication 4, **caractérisée en ce que** la grandeur représentative de l'indice d'octane est obtenue par une sonde présente dans la chaine d'alimentation du moteur en carburant.

6. Méthode selon la revendication 4, **caractérisée en ce que** la grandeur représentative de l'indice d'octane est déduite d'une comparaison entre le phénomène de cliquetis observé et le phénomène observé en présence d'un carburant de référence pour un moteur de référence.

7. Méthode selon la revendication 4, **caractérisée en ce** la grandeur représentative de l'indice d'octane est obtenue par une sonde présente dans la chaine d'alimentation du moteur en carburant, cette grandeur étant comparée au phénomène de cliquetis observé en présence d'un carburant de référence présentant un même indice d'octane sur un moteur de référence.

8. Méthode selon l'une quelconque des revendications précédentes, **caractérisée en ce que** dans la période précédent le début de fenêtre temporelle d'observation du cliquetis, une grandeur représentative d'une augmentation de pression dans la chambre de combustion est surveillée et classée comme phénomène de pré-allumage.

9. Méthode selon l'une quelconque des revendications précédentes, **caractérisée en ce que** le signal dont l'amplitude dépend d'une grandeur liée à la combustion du mélange carburé correspond aux vibrations générées dans la chambre de combustion.

10. Méthode selon l'une quelconque des revendications 3 à 9, **caractérisée en ce que** la durée de la fenêtre temporelle est choisie en fonction de la qualité du carburant.

## Claims

1. A method for the detection of an abnormal combustion in the combustion chamber of a cylinder of a spark-ignition internal combustion engine, according to which a signal is produced, the amplitude of which depends on a magnitude related to the combustion of the carbureted mixture and the signals are processed which are received during a time window according to an algorithm comparative with a reference signal representative of a normal combustion under the same conditions representative of the functioning of the engine, the start of the time window being selected with a predetermined delay with respect to an ignition base timing selected as a function of the functioning point of the engine, **characterized in that** the predetermined delay takes into account the time necessary for the combustion of the majority of the fuel.

2. The method according to Claim 1, **characterized in that** the ignition base timing is selected according to an engine mapping, at least one of the base or correction parameters of which is a magnitude which is characteristic of at least one of the following parameters: the richness of the carbureted mixture, the temperature of the fresh air admitted into the cylinder, the temperature of the engine and the altitude.

3. A detection method according to Claim 1 or Claim 2, **characterized in that** the ignition base timing is selected according to an engine mapping, at least one of the base or correction parameters of which is a magnitude which is characteristic of the quality of the fuel.

4. The method according to Claim 3, **characterized in that** the magnitude which is characteristic of the quality of the fuel is representative of the octane index of the fuel.

5. The method according to Claim 4, **characterized in that** the magnitude which is representative of the octane index is obtained by a sensor present in the fuel supply chain of the engine.

6. The method according to Claim 4, **characterized in that** the magnitude which is representative of the octane index is deduced from a comparison between the observed knock phenomenon and the phenomenon observed in the presence of a reference fuel for a reference engine.

7. The method according to Claim 4, **characterized in that** the magnitude which is representative of the octane index is obtained by a sensor present in the fuel supply chain of the engine, this magnitude being compared with the knock phenomenon observed in the presence of a reference fuel having the same octane index on a reference engine.

8. The method according to any one of the preceding claims, **characterized in that** the period preceding the start of the time window for the observation of the knocking, a magnitude representative of an increase in pressure in the combustion chamber is monitored and classified as a pre-ignition phenomenon.

9. The method according to any one of the preceding claims, **characterized in that** the signal, the amplitude of which depends on a magnitude related to the combustion of the carbureted mixture, corresponds to the vibrations generated in the combustion chamber.

10. The method according to any one of Claims 3 to 9, **characterized in that** the duration of the time window is selected as a function of the quality of the fuel.

## Patentansprüche

1. Verfahren zum Erfassen einer anormalen Verbrennung in der Brennkammer eines Zylinders eines Verbrennungsmotors mit gesteuerter Zündung, gemäß dem man ein Signal erzeugt, dessen Amplitude von einer Größe abhängt, die mit der Verbrennung des Kraftstoffgemischs zusammenhängt, und man die Signale, die während eines Zeitfensters empfangen werden, gemäß einem Algorithmus verarbeitet, der mit einem Bezugssignal vergleicht, das für eine normale Verbrennung unter den gleichen repräsentativen Bedingungen des Betriebs des Motors repräsentativ ist, wobei der Beginn des Zeitfensters mit einer vorbestimmten Verzögerung in Bezug zu einem Basisvorlauf beim Zünden ausgewählt wird, der in Abhängigkeit von dem Betriebspunkt des Motors ausgewählt wird, **dadurch gekennzeichnet, dass** die vorbestimmte Verzögerung die Zeit berücksichtigt, die für die Verbrennung des größten Teils des Kraftstoffs erforderlich ist.

2. Verfahren nach Anspruch 1, **dadurch gekennzeichnet, dass** der Basisvorlauf bei der Zündung gemäß einer Motorkartographie ausgewählt wird, von welcher mindestens einer der Basisparameter oder Korrekturparameter eine charakteristische Größe mindestens eines der folgenden Parameter ist: die Reichhaltigkeit des Kraftstoffgemischs, die Temperatur der Frischluft, die in den Zylinder eingelassen wird, die Temperatur des Motors und die Seehöhe.

3. Verfahren zum Erfassen nach Anspruch 1 oder Anspruch 2, **dadurch gekennzeichnet, dass** der Basisvorlauf bei der Zündung gemäß einer Motorkartographie ausgewählt wird, von welcher mindestens einer der Basisparameter oder Korrekturparameter eine charakteristische Größe der Qualität des Kraftstoffs ist.

4. Verfahren nach Anspruch 3, **dadurch gekennzeichnet, dass** die charakteristische Größe der Qualität des Kraftstoffs für die Oktanzahl des Kraftstoffs repräsentativ ist.

5. Verfahren nach Anspruch 4, **dadurch gekennzeichnet, dass** die für die Oktanzahl repräsentative Größe durch eine Sonde erzielt wird, die in der Kraftstoffversorgungslinie des Motors vorhanden ist.

6. Verfahren nach Anspruch 4, **dadurch gekennzeichnet, dass** die repräsentative Größe der Oktanzahl aus einem Vergleich zwischen der beobachteten Klopferscheinung und der Erscheinung, die bei Vorliegen eines Bezugskraftstoffs für einen Bezugsmotor beobachtet wird, abgeleitet wird.

7. Verfahren nach Anspruch 4, **dadurch gekennzeichnet, dass** die für die Oktanzahl repräsentative Größe durch eine Sonde erzielt wird, die in der Kraftstoffversorgungslinie des Motors vorhanden ist, wobei diese Größe mit der Klopferscheinung bei Vorliegen eines Bezugskraftstoffs, der die gleiche Oktanzahl auf einem Bezugsmotor aufweist, beobachtet wird.

8. Verfahren nach einem der vorhergehenden Ansprüche, **dadurch gekennzeichnet, dass** in der Zeitspanne, die dem Beginn des Beobachtungszeitfensters des Klopfens vorausgeht, eine Größe, die für eine Steigerung des Drucks in der Brennkammer repräsentativ ist, überwacht und als Vorzünderscheinung eingestuft wird.

9. Verfahren nach einem der vorhergehenden Ansprüche, **dadurch gekennzeichnet, dass** das Signal, dessen Amplitude von einer Größe in Zusammenhang mit der Verbrennung des Kraftstoffgemischs abhängt, den Vibrationen entspricht, die in der Brennkammer erzeugt werden.

10. Verfahren nach einem der Ansprüche 3 bis 9, **dadurch gekennzeichnet, dass** die Dauer des Zeitfensters in Abhängigkeit von der Qualität des Kraftstoffs ausgewählt wird.
